# EUROPEAN PATENT APPLICATION

(11) **EP 4 706 796 A1**
(43) Date of publication of application: **11.03.2026**
(21) Application number: 24862589.9
(22) Date of filing: 22.08.2024
(51) Int. Cl.: B01D 19/04, C10M 155/02, C10M 169/04, C10N 20/04, C10N 30/18, C10N 40/04, C10N 40/06

(54) **ANTIFOAMING AGENT, LUBRICATING OIL COMPOSITION CONTAINING ANTIFOAMING AGENT, AND MACHINE USING LUBRICATING OIL COMPOSITION**

(30) Priority: 05.09.2023 JP 2023143531
(71) Applicant: DIC Corporation, Tokyo 174-8520 (JP)
(72) Inventor: FUJIWARA Ryuta, Ichihara-shi, Chiba 290-8585 (JP); MATSUKI Yuya, Ichihara-shi, Chiba 290-8585 (JP)
(74) Representative: Kraus & Lederer PartGmbB
(86) International application number: PCT/JP2024/029742
(87) International publication number: WO 2025/052935

(57) **Abstract**

Provided is an anti-foaming agent exhibiting excellent anti-foaming properties even in a high-temperature environment. The anti-foaming agent is a polymer containing, as polymerization components, at least a polymerizable monomer (1) and a polymerizable monomer (2);
the polymerizable monomer (1) having a functional group represented by - Si[OSi(R)₃]ₙ[R']₃₋ₙ (where n is an integer in a range of from 1 to 3, R is each independently an alkyl group having from 1 to 3 carbon atoms, and R' is each independently an alkyl group having from 1 to 3 carbon atoms) and one polymerizable unsaturated group; and the polymerizable monomer (2) having two or more polymerizable unsaturated groups.

## Description

### TECHNICAL FIELD

The present invention relates to an anti-foaming agent, a lubricating oil composition containing the anti-foaming agent, and a machine using the lubricating oil composition.

### BACKGROUND ART

In recent years, reduction of carbon dioxide emissions has become an important theme in industry. Among them, carbon dioxide emission of transportation equipment, including automobiles, accounts for nearly 20% of the total, and as one of the countermeasures to reduce the emissions, switching from gasoline-powered vehicles to electric vehicles (EVs) has been proposed as a policy of each country.

The most important challenge in the EVs is improvement of fuel efficiency, and for this purpose, studies on miniaturization of a vehicle body, improvement in efficiency of a drive system, and the like are being made at a rapid pace. One of the challenges in high efficiency of the drive system is foaming of lubricating oil. In order to reduce frictional resistance, the viscosity of lubricating oil has been reduced, but this reduction in viscosity easily causes foaming of lubricating oil.

Continuous high-load operation or high-speed driving increases foaming in the lubricating oil having a reduced viscosity and causes problems such as reduced lubricating performance or cooling efficiency due to foaming; wear and seizure due to breakage of oil films in friction portions; and acceleration of lubricating oil deterioration due to an increase in oil temperature.

Therefore, a lubricating oil having high anti-foaming properties is required so that foaming can be suppressed over a long period of time from the initial stage of operation, and the lubricating oil contains an anti-foaming agent for preventing foaming. As the anti-foaming agent, a polysiloxane-based anti-foaming agent is known, and various polysiloxane-based anti-foaming agents have been proposed (for example, Patent Document 1).

### CITATION LIST

### PATENT DOCUMENTS

Patent Document 1: JP 2017-039924 A

### SUMMARY OF INVENTION

### TECHNICAL PROBLEM

A known polysiloxane-based anti-foaming agent has the problem of a significant decrease in anti-foaming properties with increasing temperature, for example, failing to provide sufficient anti-foaming properties in automotive applications where such anti-foaming properties are required at high temperatures.

An object of the present invention is to provide an anti-foaming agent exhibiting excellent anti-foaming properties even in a high-temperature environment.

Another object of the present invention is to provide a lubricating oil composition capable of exhibiting excellent lubricating performance even in a high-temperature environment.

### SOLUTION TO PROBLEM

As a result of intensive studies to solve the above problems, the present inventors have found that a polymer containing, as polymerization components, at least a polymerizable monomer having a specific silicone functional group and one polymerizable unsaturated group and a polymerizable monomer having two or more polymerizable unsaturated groups is an anti-foaming agent exhibiting excellent anti-foaming properties even in a high-temperature environment, and thus have completed the present invention.

That is, the present invention relates to the following anti-foaming agent and the like.
1. An anti-foaming agent including: a polymer containing, as polymerization components, at least a polymerizable monomer (1) and a polymerizable monomer (2); the polymerizable monomer (1) having a functional group represented by -Si[OSi(R)₃]ₙ[R']₃₋ₙ (where n is an integer in a range of from 1 to 3, R is each independently an alkyl group having from 1 to 3 carbon atoms, and R' is each independently an alkyl group having from 1 to 3 carbon atoms) and one polymerizable unsaturated group; and the polymerizable monomer (2) having two or more polymerizable unsaturated groups.
2. The anti-foaming agent according to 1, wherein the polymerizable monomer (1) is a compound represented by General Formula (1-1) set forth below: 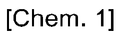 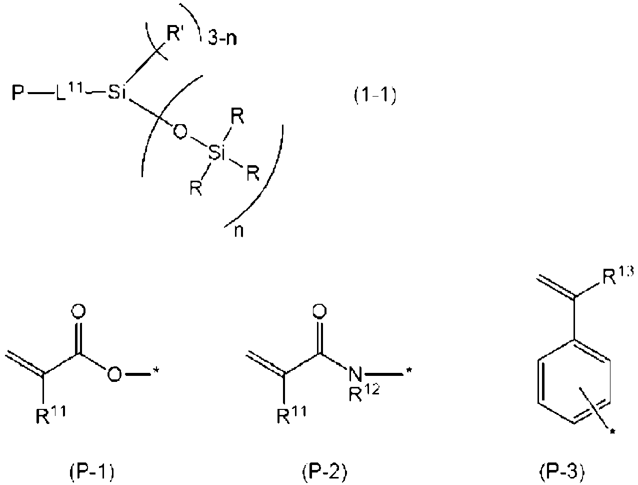 (where
   R is each independently an alkyl group having from 1 to 3 carbon atoms,
   R' is each independently an alkyl group having from 1 to 3 carbon atoms,
   L¹¹ is a divalent organic group or a single bond,
   n is an integer in a range of from 1 to 3, and
   P is a polymerizable group represented by General Formula (P-1), a polymerizable group represented by General Formula (P-2), or a polymerizable group represented by General Formula (P-3),
   where in General Formulas (P-1), (P-2), and (P-3),
   R¹¹ is a hydrogen atom or a methyl group,
   R¹² is a hydrogen atom or an organic group,
   R¹³ is a hydrogen atom or a methyl group, and
   * is a bond that binds to L¹¹).
3. The anti-foaming agent according to 1 or 2, wherein a content of the polymerizable monomer (1) in the polymerization components is in a range of 10 mass% or more.
4. The anti-foaming agent according to any one of 1 to 3, wherein the polymerizable monomer (2) is a compound represented by General Formula (2-1) set forth below: 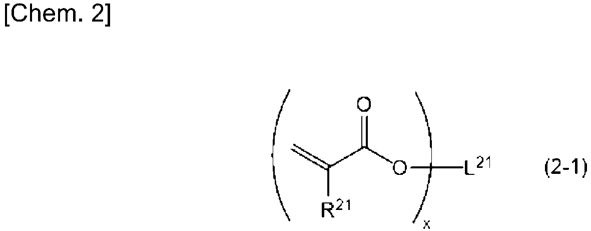 (where
   R²¹ is a hydrogen atom or a methyl group,
   x is an integer of 2 or more, and
   L²¹ is an x-valent organic group).
5. The anti-foaming agent according to any one of 1 to 4, wherein a content of the polymerizable monomer (2) in the polymerization components is in a range of from 1 to 75 mass%.
6. The anti-foaming agent according to any one of 1 to 5, wherein the polymerization components include a polymerizable monomer (3) containing one or more selected from the group consisting of an alkyl group having from 1 to 18 carbon atoms, an aromatic group having from 6 to 18 carbon atoms, a group containing a polyoxyalkylene chain, and a group containing a polyester chain.
7. The anti-foaming agent according to 6, wherein the polymerizable monomer (3) is one or more selected from the group consisting of: a compound represented by General Formula (3-1) set forth below, a compound represented by General Formula (3-2) set forth below, a compound represented by General Formula (3-3) set forth below, a compound represented by General Formula (3-4) set forth below, and a compound represented by General Formula (3-5) set forth below: 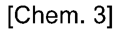 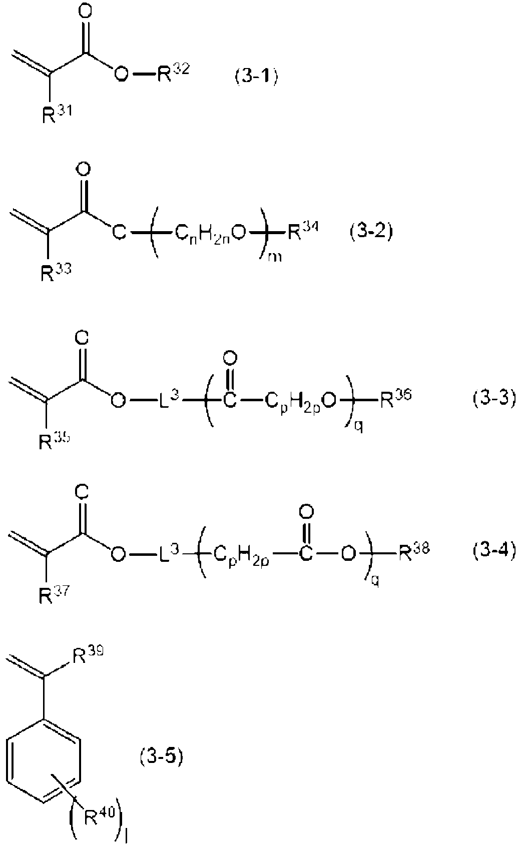 (where in General Formulas (3-1), (3-2), (3-3), (3-4), and (3-5),
   R³¹ is a hydrogen atom or a methyl group,
   R³² is an alkyl group having from 1 to 18 carbon atoms,
   R³³ is a hydrogen atom or a methyl group,
   R³⁴ is a hydrogen atom or an alkyl group having from 1 to 18 carbon atoms,
   R³⁵ is a hydrogen atom or a methyl group,
   R³⁶ is an alkyl group having from 1 to 18 carbon atoms, an alkyl group containing an ether bond having from 1 to 18 carbon atoms, or a hydrogen atom,
   R³⁷ is a hydrogen atom or a methyl group,
   R³⁸ is an alkyl group having from 1 to 18 carbon atoms, an alkyl group containing an ether bond having from 1 to 18 carbon atoms, or a hydrogen atom,
   L³ is a divalent organic group or a single bond,
   R³⁹ is a hydrogen atom or a methyl group,
   R⁴⁰ is each independently an alkyl group having from 1 to 6 carbon atoms or an alkoxy group having from 1 to 6 carbon atoms,
   n is an integer in a range of from 1 to 4, m represents the number of repeating units, a number average value of m is in a range of from 1 to 200, p is an integer in a range of from 1 to 10, q represents the number of repeating units, a number average value of q is in a range of from 1 to 100, and I is an integer in a range of from 0 to 5).
8. The anti-foaming agent according to 6 or 7, wherein the polymerizable monomer (3) is the compound represented by General Formula (3-2).
9. The anti-foaming agent according to any one of 6 to 8, wherein a content of the polymerizable monomer (3) in the polymerization components is in a range of from 0 to 75 mass%.
10. The anti-foaming agent according to any one of 1 to 9, wherein a number average molecular weight is in a range of from 2000 to 200000.
11. A lubricating oil composition containing a lubricating base oil and the anti-foaming agent according to any one of claims 1 to 10.
12. The lubricating oil composition according to 11, which is used in a machine including an internal combustion engine or an electric motor for lubricating a drive unit of the machine.
13. The lubricating oil composition according to 11, which is used in an automobile including an internal combustion engine or an electric motor for lubricating a drive unit of the automobile.
14. A machine using the lubricating oil composition according to 11 in a drive unit.

### ADVANTAGEOUS EFFECTS OF INVENTION

According to the present invention, it is possible to provide an anti-foaming agent exhibiting excellent anti-foaming properties even in a high-temperature environment.

According to the present invention, it is possible to provide a lubricating oil composition capable of exhibiting excellent lubricating performance even in a high-temperature environment.

### DESCRIPTION OF EMBODIMENTS

Hereinafter, an embodiment of the present invention will be described. The present invention is not limited by the following embodiment, and modifications can be appropriately applied in a range that does not impair the effect of the present invention.

Moreover, as used herein, the term "(meth)acrylate" refers to one or both of acrylate and methacrylate.

### Anti-foaming Agent

The anti-foaming agent of the present invention includes a polymer containing, as polymerization components, at least a polymerizable monomer (1) and a polymerizable monomer (2); the polymerizable monomer (1) having a functional group represented by -Si[OSi(R)₃]ₙ[R']₃₋ₙ (where n is an integer of from 1 to 3, R is each independently an alkyl group having from 1 to 3 carbon atoms, and R' is each independently an alkyl group having from 1 to 3 carbon atoms) and one polymerizable unsaturated group; and the polymerizable monomer (2) having two or more polymerizable unsaturated groups.

The term "polymerization components" as used herein means components constituting a polymer, and does not include a solvent, a polymerization initiator, and the like that do not constitute a polymer.

In the present invention, the term "polymerizable monomer" means a compound having a polymerizable unsaturated group, and examples of the polymerizable unsaturated group included in the polymerizable monomer (1) and the polymerizable monomer (2) include a (meth)acryloyl group, a (meth)acryloyloxy group, a (meth)acryloylamide group, a vinyl ether group, an allyl group, a styryl group, a (meth)acryloylamino group, and a maleimide group.

A polymer containing, as polymerization components, at least the polymerizable monomer (1) and the polymerizable monomer (2), which serves as the anti-foaming agent of the present invention, may be referred to as the "polymer of the present invention".

Hereinafter, each of the components constituting the polymer of the present invention will be described.

The functional group represented by -Si[OSi(R)₃]ₙ[R']₃₋ₙ in the polymerizable monomer (1) is preferably a functional group represented by - Si[OSi(R)₃]₃, and more preferably -Si[OSi(CH₃)₃]₃.

The polymerizable monomer (1) is preferably a compound represented by General Formula (1-1) set forth below. 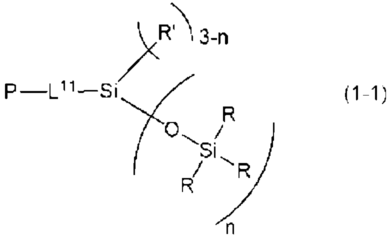 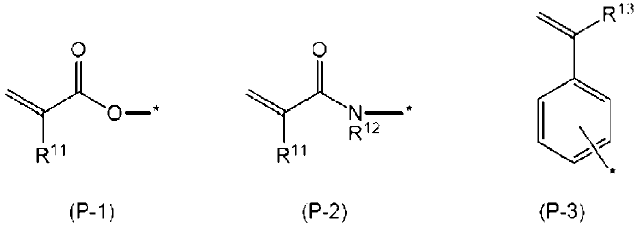 (where
R is each independently an alkyl group having from 1 to 3 carbon atoms,
R' is each independently an alkyl group having from 1 to 3 carbon atoms,
L¹¹ is a divalent organic group or a single bond,
n is an integer in a range of from 1 to 3, and
P is a polymerizable group represented by General Formula (P-1), a polymerizable group represented by General Formula (P-2), or a polymerizable group represented by General Formula (P-3),
where in General Formulas (P-1), (P-2), and (P-3),
R¹¹ is a hydrogen atom or a methyl group,
R¹² is a hydrogen atom or an organic group,
R¹³ is a hydrogen atom or a methyl group, and
* is a bond that binds to L¹¹).

The term "single bond" for L¹¹ means a case where O and Si are directly bonded.

The divalent organic group of L¹¹ is preferably an alkylene group having from 1 to 50 carbon atoms, or an alkyleneoxy group having from 1 to 50 carbon atoms.

Examples of the alkylene group having from 1 to 50 carbon atoms in L¹¹ include a methylene group, an ethylene group, an n-propylene group, an n-butylene group, an n-pentylene group, an n-hexylene group, an n-heptylene group, an n-octylene group, an n-nonylene group, an n-decylene group, an n-dodecylene group, an isopropylene group, a 2-methylpropylene group, a 2-methylhexylene group, and a tetramethylethylene group.

The alkylene group having from 1 to 50 carbon atoms in L¹¹ is preferably an alkylene group having from 1 to 15 carbon atoms, more preferably an alkylene group having from 1 to 5 carbon atoms, and still more preferably a methylene group, an ethylene group, an n-propylene group, or an isopropylene group.

The alkyleneoxy group having from 1 to 50 carbon atoms in L¹¹ is, for example, a group in which one or more -CH₂- in the alkylene group are substituted with -O-.

The alkyleneoxy group having from 1 to 50 carbon atoms in L¹¹ is preferably an alkyleneoxy group having from 1 to 15 carbon atoms, more preferably an alkyleneoxy group having from 1 to 8 carbon atoms, and still more preferably a methyleneoxy group, an ethyleneoxy group, a propyleneoxy group, an oxytrimethylene group, a butyleneoxy group, an oxytetramethylene group, a pentyleneoxy group, a heptyleneoxy group or an octyleneoxy group.

When the divalent organic group in L¹¹ is an alkylene group having from 1 to 50 carbon atoms or an alkyleneoxy group having from 1 to 50 carbon atoms, in these divalent organic groups, some -CH₂- may be replaced with a carbonyl group (-C(=O)-), a phenylene group, an amide bond, or a urethane bond (-NHC(=O)-).

When the divalent organic group of L¹¹ is an alkylene group having from 1 to 50 carbon atoms or an alkyleneoxy group having from 1 to 50 carbon atoms, a substituent such as a hydroxyl group may be substituted on a carbon atom of these groups.

Examples of the organic group of R¹² include an alkyl group having 1 to 18 carbon atoms.

Examples of the alkylene group having from 1 to 18 carbon atoms in R¹² include a methyl group, an ethyl group, an n-propyl group, an n-butyl group, an n-pentyl group, an n-hexyl group, an n-heptyl group, an n-octyl group, an n-nonyl group, an n-decyl group, an n-dodecyl group, an isopropyl group, a 2-methylpropyl group, a 2-methylhexyl group, and a tetramethylethyl group.

n is preferably 2 or 3, and more preferably 3.

The compound represented by General Formula (1-1) is preferably a compound (n = 3) represented by General Formula (1-2) set forth below or a compound (n = 2) represented by General Formula (1-3) set forth below, and more preferably a compound represented by General Formula (1-2) set forth below. 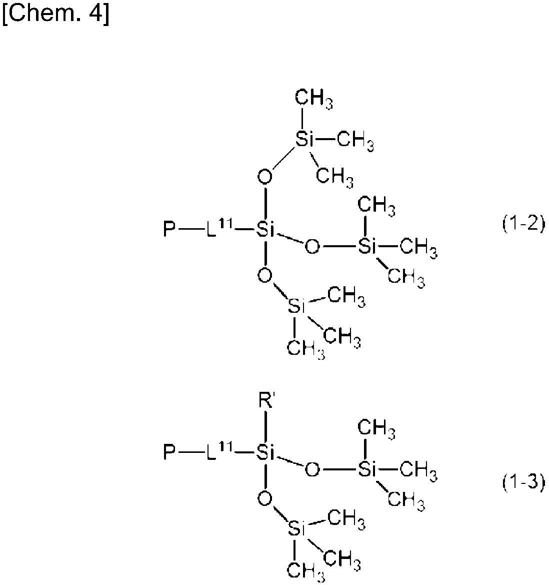 (In General Formulas (1-2) and (1-3)
P, R', R¹¹, and L¹¹ are the same as P, R', R¹¹, and L¹¹ in General Formula (1-1), respectively)

The polymerizable monomer (1), serving as a polymerization component, may be a single type or a combination of two or more polymerizable monomers (1) having different structures from each other.

The polymerizable monomer (1) can be produced by a known method, and a commercially available product thereof may be used.

As the commercially available product of the polymerizable monomer (1), for example, 3-(methacryloyloxy)propyltris(trimethylsiloxy)silane is commercially available.

As the polymerizable monomer (1), in addition to 3-(methacryloyloxy)propyltris(trimethylsiloxy)silane, the following compound may also be used, for example.

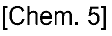

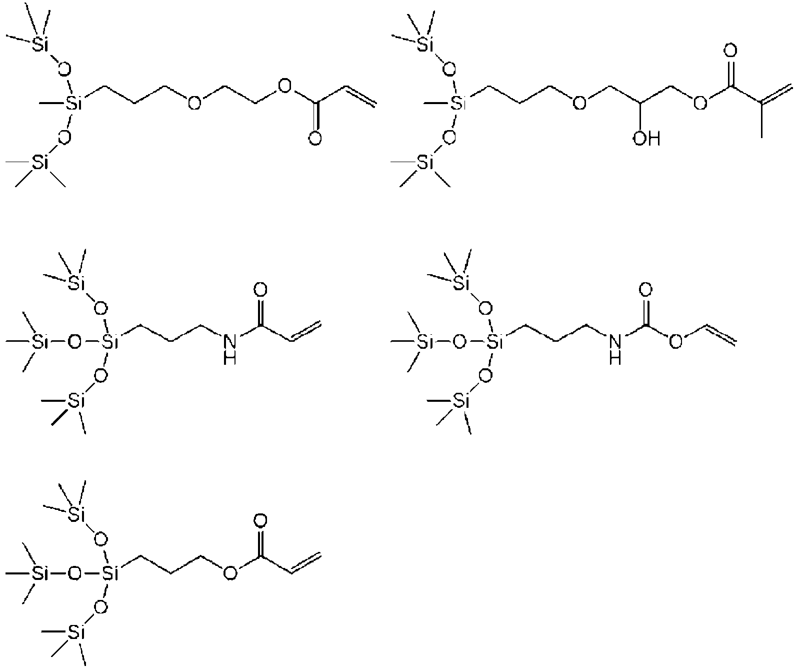

In the polymer of the present invention, the lower limit of the percentage of the polymerizable monomer (1) content is, relative to the total amount of the polymerization components of the polymer, for example, 10 mass% or more, 20 mass% or more, 25 mass% or more, 30 mass% or more, or 35 mass% or more.

The upper limit of the percentage of the polymerizable monomer (1) content is not particularly limited and is, relative to the total amount of the polymerization components of the polymer, for example, 99 mass% or less, 90 mass% or less, 80 mass% or less, 70 mass% or less, or 60 mass% or less.

Examples of the combination of the upper limit and the lower limit of the percentage of the polymerizable monomer (1) content include a range of from 10 mass% to 99 mass% of the total amount of the polymerization components of the polymer, preferably a range of from 25 mass% to 80 mass% of the total amount of the polymerization components of the polymer.

The percentage of the polymerizable monomer (1) content can be adjusted based on the feed ratio of raw materials of the polymerizable monomer (1) in producing the polymer of the present invention.

The polymerizable monomer (2) is a polymerizable monomer having two or more polymerizable unsaturated groups, and may have two or more of one polymerizable unsaturated group or two or more of two or more polymerizable unsaturated groups.

The polymerizable monomer (2) is preferably a polymerizable monomer having two or more (meth)acryloyl groups or a polymerizable monomer having two or more (meth)acryloyloxy groups.

The polymerizable monomer (2) is preferably a compound represented by General Formula (2-1) set forth below. 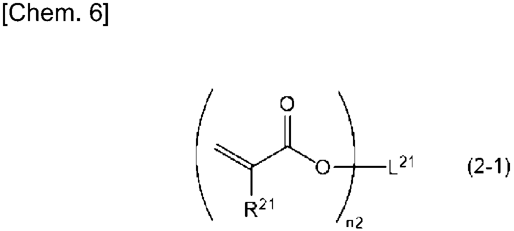 (In General Formula (2-1),
R²¹ is a hydrogen atom or a methyl group,
n2 is an integer of 2 or more, and
L²¹ is an n2-valent organic group).

n2 may be an integer of 2 or more, and is, for example, an integer in the range of from 2 to 12, preferably an integer in the range of from 2 to 8, more preferably an integer in the range of from 2 to 6, and even more preferably an integer in the range of from 2 to 4.

The n2-valent organic group of L²¹ is an organic group having a valence corresponding to the numerical value of n2, for example, a divalent organic group when n2 is 2, and a hexavalent organic group when n2 is 6.

L²¹ is preferably an alkylene group having from 1 to 50 carbon atoms or an alkyleneoxy group having from 1 to 50 carbon atoms, and is an organic group in which a hydrogen atom bonded to a carbon atom of the alkylene group and the alkyleneoxy group is replaced with a bond to have a valence corresponding to a numerical value of n2.

Thus, when L²¹ is a divalent organic group, L²¹ is preferably an alkylene group having from 1 to 50 carbon atoms or an alkyleneoxy group having from 1 to 50 carbon atoms.

Examples of the alkylene group having from 1 to 50 carbon atoms in L²¹ include a methylene group, an ethylene group, an n-propylene group, an n-butylene group, an n-pentylene group, an n-hexylene group, an n-heptylene group, an n-octylene group, an n-nonylene group, an n-decylene group, an n-dodecylene group, an isopropylene group, a 2-methylpropylene group, a 2-methylhexylene group, and a tetramethylethylene group.

The alkylene group having from 1 to 50 carbon atoms in L²¹ is preferably an alkylene group having from 1 to 15 carbon atoms, more preferably an alkylene group having from 1 to 5 carbon atoms, and still more preferably a methylene group, an ethylene group, an n-propylene group, or an isopropylene group.

The alkyleneoxy group having from 1 to 50 carbon atoms in L²¹ is, for example, a group in which one or more -CH₂- in the alkylene group are substituted with -O-.

The alkyleneoxy group having from 1 to 50 carbon atoms in L²¹ is preferably an alkyleneoxy group having from 1 to 15 carbon atoms, more preferably an alkyleneoxy group having from 1 to 8 carbon atoms, and still more preferably a methyleneoxy group, an ethyleneoxy group, a propyleneoxy group, an oxytrimethylene group, a butyleneoxy group, an oxytetramethylene group, a pentyleneoxy group, a heptyleneoxy group or an octyleneoxy group.

When the divalent organic group in L²¹ is an alkylene group having from 1 to 50 carbon atoms or an alkyleneoxy group having from 1 to 50 carbon atoms, in these divalent organic groups, some -CH₂- may be replaced with a carbonyl group (-C(=O)-), a phenylene group, a sulfide bond (-S-), an amide bond, or a urethane bond.

When the divalent organic group of L²¹ is an alkylene group having from 1 to 50 carbon atoms or an alkyleneoxy group having from 1 to 50 carbon atoms, a substituent such as a hydroxyl group may be substituted on a carbon atom of these groups.

Specific examples of the polymerizable monomer (2) include ethylene glycol di(meth)acrylate, propylene glycol di(meth)acrylate, butanediol di(meth)acrylate, polyethylene glycol di(meth)acrylate, 1,6-hexanediol di(meth)acrylate, 1,9-nonanediol di(meth)acrylate, 1,10-decanediol di(meth)acrylate, neopentyl glycol di(meth)acrylate, 2-hydroxy-3-methacrylpropyl acrylate, 2-hydroxy-1, 3-dimethacryloxypropane, polypropylene glycol di(meth)acrylate, polytetramethylene glycol di(meth)acrylate, tricyclodecanedimethanol di(meth)acrylate, ethoxylated bisphenol A di(meth)acrylate, trimethylolpropane tri(meth)acrylate, ethoxylated trimethylolpropane tri(meth)acrylate, propoxylated trimethylolpropane tri(meth)acrylate, tris-(2-acryloxyethyl) isocyanurate, bis-(2-acryloxyethyl) isocyanurate, pentaerythritol tri(meth)acrylate, pentaerythritol tetra(meth)acrylate, ethoxylated pentaerythritol tetra(meth)acrylate, ditrimethylolpropane tetra(meth)acrylate, dipentaerythritol penta(meth)acrylate, dipentaerythritol hexa(meth)acrylate, and polypentaerythritol poly(meth)acrylate.

The polymerizable monomer (2), serving as a polymerization component, may be a single type or a combination of two or more polymerizable monomers (2) having different structures from each other.

The polymerizable monomer (2) can be produced by a known method, and a commercially available product thereof may be used.

In the polymer of the present invention, the percentage of the polymerizable monomer (2) content is, relative to 100 parts by mass of the polymerizable monomer (1), for example, in a range of from 0.1 to 900 parts by mass, preferably in a range of from 1 to 500 parts by mass relative to 100 parts by mass of the polymerizable monomer (1), and more preferably in a range of from 3 to 300 parts by mass relative to 100 parts by mass of the polymerizable monomer (1). The percentage is more preferably in a range of from 5 to 200 parts by mass relative to 100 parts by mass of the polymerizable monomer (1).

The percentage of the polymerizable monomer (2) content can be adjusted based on the feed ratio of raw materials of the polymerizable monomer (2) in producing the polymer of the present invention.

In the polymer of the present invention, the percentage of the polymerizable monomer (2) content is, relative to the total amount of the polymerization components of the polymer, for example, in a range of from 0.1 to 90 mass%, preferably in a range of from 1 to 75 mass%, more preferably in a range of from 3 to 60 mass%, and even more preferably in a range of from 5 to 50 mass%.

The polymerization components of the polymer of the present invention preferably further include, in addition to the polymerizable monomer (1) and the polymerizable monomer (2), a polymerizable monomer (3) having one or more selected from the group consisting of an alkyl group having from 1 to 18 carbon atoms, an aromatic group having from 6 to 18 carbon atoms, a group containing a polyoxyalkylene chain, and a group containing a polyester chain as a polymerization component.

By further including the polymerizable monomer (3) as a polymerization component, for example, when the anti-foaming agent of the present invention is added to a lubricating oil composition, high compatibility of the anti-foaming agent with the lubricating base oil can be ensured.

The alkyl group having from 1 to 18 carbon atoms included in the polymerizable monomer (3) may be any of a linear alkyl group, a branched alkyl group, or a cyclic alkyl group, and specific examples thereof include a methyl group, an ethyl group, a normal propyl group, an isopropyl group, an n-butyl group, a t-butyl group, an n-hexyl group, a cyclohexyl group, an n-octyl group, and a hexadecyl group.

The alkyl group having from 1 to 18 carbon atoms included in the polymerizable monomer (3) is preferably an alkyl group having from 1 to 6 carbon atoms.

Examples of the aromatic group having from 6 to 18 carbon atoms included in the polymerizable monomer (3) include a phenyl group, a naphthyl group, an anthracene-1-yl group, and a phenanthrene-1-yl group.

The group containing a (poly)oxyalkylene chain included in the polymerizable monomer (3) is a monovalent group containing a repeating moiety of oxyalkylene or a divalent linking group containing a repeating moiety of oxyalkylene.

The group containing a polyester chain included in the polymerizable monomer (3) is a monovalent group containing a repeating moiety of ester bonding or a divalent linking group containing a repeating moiety of ester bonding.

The alkyl group having from 1 to 18 carbon atoms included in the polymerizable monomer (3) may further contain a substituent, and examples of the substituent include a hydroxyl group and an aryl group.

The aromatic group having from 6 to 18 carbon atoms included in the polymerizable monomer (3) may further contain a substituent, and examples of the substituent include a hydroxyl group and an alkyl group.

Examples of the polymerizable monomer (3) that includes an alkyl group having from 1 to 18 carbon atoms and whose polymerizable unsaturated group is a (meth)acryloyl group include: alkyl esters having from 1 to 18 carbon atoms of (meth)acrylic acid, such as methyl (meth)acrylate, ethyl (meth)acrylate, n-propyl (meth)acrylate, isopropyl (meth)acrylate, n-butyl (meth)acrylate, s-butyl (meth)acrylate, isobutyl (meth)acrylate, t-butyl (meth)acrylate, n-pentyl (meth)acrylate, n-hexyl (meth)acrylate, n-heptyl (meth)acrylate, n-octyl (meth)acrylate, 2-ethylhexyl (meth)acrylate, decyl (meth)acrylate, dodecyl (meth)acrylate, stearyl (meth)acrylate, and isostearyl (meth)acrylate; and bridged cyclic alkyl esters having from 1 to 18 carbon atoms of (meth)acrylic acid, such as dicyclopentanyloxylethyl (meth)acrylate, isobornyloxylethyl (meth)acrylate, isobornyl (meth)acrylate, adamantyl (meth)acrylate, dimethyladamantyl (meth)acrylate, dicyclopentanyl (meth)acrylate, and dicyclopentenyl (meth)acrylate.

Note that, in the present application, the term "(meth)acrylate" refers to both of methacrylate and acrylate.

Examples of the polymerizable monomer (3) that includes a phenylalkyl group having from 7 to 18 carbon atoms or a phenoxyalkyl group having from 7 to 18 carbon atoms and whose polymerizable unsaturated group is a (meth)acryloyl group include benzyl (meth)acrylate, phenoxymethyl (meth)acrylate, and 2-phenoxyethyl (meth)acrylate.

Examples of the polymerizable monomer (3) that has an alkyl group having from 1 to 18 carbon atoms and whose polymerizable unsaturated group is a vinyl ether group include: alkyl vinyl ethers such as methyl vinyl ether, ethyl vinyl ether, n-propyl vinyl ether, isopropyl vinyl ether, n-butyl vinyl ether, isobutyl vinyl ether, tert-butyl vinyl ether, n-pentyl vinyl ether, n-hexyl vinyl ether, n-octyl vinyl ether, n-dodecyl vinyl ether, 2-ethylhexyl vinyl ether, and cyclohexyl vinyl ether; and cycloalkyl vinyl ether.

Examples of the polymerizable monomer (3) including an aromatic group having from 6 to 18 carbon atoms include styrene, α-methylstyrene, p-methylstyrene, and p-methoxystyrene.

Examples of the polymerizable monomer (3) that has an alkyl group having from 1 to 18 carbon atoms and whose polymerizable unsaturated group is a (meth)acryloylamino group include N,N-dimethylacrylamide, N,N-diethylacrylamide, N-isopropylacrylamide, diacetone acrylamide, and acryloyl morpholine.

Examples of the polymerizable monomer (B) that includes an alkyl group having from 1 to 18 carbon atoms and whose polymerizable unsaturated group is a maleimide group include methylmaleimide, ethylmaleimide, propylmaleimide, butylmaleimide, hexylmaleimide, octylmaleimide, dodecylmaleimide, stearylmaleimide, and cyclohexylmaleimide.

Examples of the polymerizable monomer (3) that has a group including a polyoxyalkylene chain and whose polymerizable unsaturated group is a (meth)acryloyl group include polypropylene glycol mono(meth)acrylate, polyethylene glycol mono(meth)acrylate, polytrimethylene glycol mono(meth)acrylate, polytetramethylene glycol mono(meth)acrylate, poly(ethylene glycol/propylene glycol) mono(meth)acrylate, polyethylene glycol/polypropylene glycol mono(meth)acrylate, poly(ethylene glycol/tetramethylene glycol) mono(meth)acrylate, polyethylene glycol/polytetramethylene glycol mono(meth)acrylate, poly(propylene glycol/tetramethylene glycol) mono(meth)acrylate, polypropylene glycol/polytetramethylene glycol mono(meth)acrylate, poly(propylene glycol/1,2-butylene glycol) mono(meth)acrylate, polypropylene glycol/poly(1,2-butylene glycol) mono(meth)acrylate, poly(ethylene glycol/1,2-butylene glycol) mono(meth)acrylate, polyethylene glycol/poly(1,2-butylene glycol) mono(meth)acrylate, poly(tetraethylene glycol/1,2-butylene glycol) mono(meth)acrylate, polytetraethylene glycol/poly(1,2-butylene glycol) mono(meth)acrylate, poly(1,2-butylene glycol) mono(meth)acrylate, poly(ethylene glycol/trimethylene glycol) mono(meth)acrylate, poly(ethylene glycol/trimethylene glycol) mono(meth)acrylate, polyethylene glycol/polytrimethylene glycol mono(meth)acrylate, poly(propylene glycol/trimethylene glycol) mono(meth)acrylate, polypropylene glycol/polytrimethylene glycol mono(meth)acrylate, poly(trimethylene glycol/tetramethylene glycol) mono(meth)acrylate, polytrimethylene glycol/polytetramethylene glycol mono(meth)acrylate, poly(1,2-butylene glycol/trimethylene glycol) mono(meth)acrylate, poly(1,2-butylene glycol/polytrimethylene glycol) mono(meth)acrylate, 2-hydroxyethyl (meth)acrylate, 2-hydroxypropyl (meth)acrylate, 2-hydroxybutyl (meth)acrylate, 4-hydroxybutyl (meth)acrylate, poly(1,2-butylene glycol/tetramethylene glycol) mono(meth)acrylate, and poly(1,2-butylene glycol/polytetramethylene glycol) mono(meth)acrylate.

Note that, the term "poly(ethylene glycol/propylene glycol)" means a random copolymer of ethylene glycol and propylene glycol, and the term "polyethylene glycol/polypropylene glycol" means a block copolymer of ethylene glycol and propylene glycol.

The polymerizable monomer (3) is one or more selected from the group consisting of: a compound represented by General Formula (3-1) set forth below, a compound represented by General Formula (3-2) set forth below, a compound represented by General Formula (3-3) set forth below, and a compound represented by General Formula (3-4) set forth below. 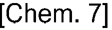 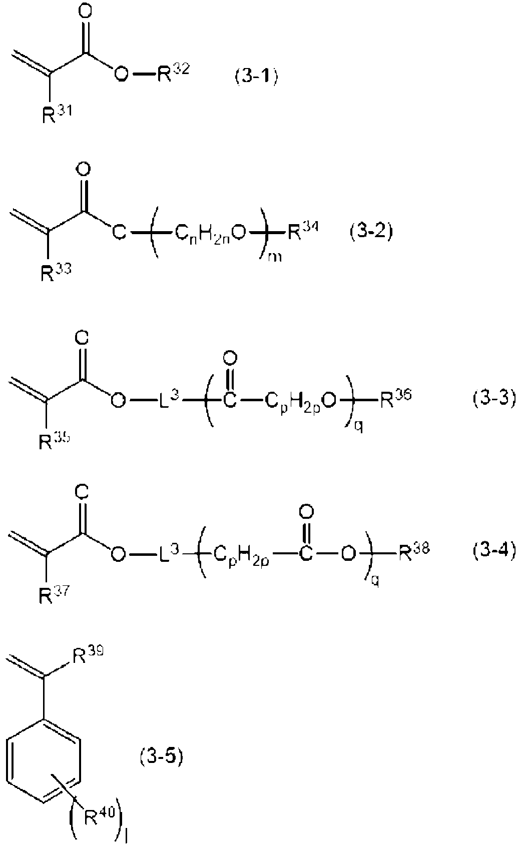 (In General Formulas (3-1), (3-2), (3-3), (3-4), and (3-5),
R³¹ is a hydrogen atom or a methyl group,
R³² is an alkyl group having from 1 to 18 carbon atoms,
R³³ is a hydrogen atom or a methyl group,
R³⁴ is a hydrogen atom or an alkyl group having from 1 to 18 carbon atoms,
R³⁵ is a hydrogen atom or a methyl group,
R³⁶ is an alkyl group having from 1 to 18 carbon atoms, an alkyl group containing an ether bond having from 1 to 18 carbon atoms, or a hydrogen atom,
R³⁷ is a hydrogen atom or a methyl group,
R³⁸ is an alkyl group having from 1 to 18 carbon atoms, an alkyl group containing an ether bond having from 1 to 18 carbon atoms, or a hydrogen atom,
L³ is a divalent organic group or a single bond,
R³⁹ is a hydrogen atom or a methyl group,
R⁴⁰ is each independently an alkyl group having from 1 to 6 carbon atoms or an alkoxy group having from 1 to 6 carbon atoms,
n is an integer in a range of from 1 to 4, m represents the number of repeating units, a number average value of m is in a range of from 1 to 200, p is an integer in a range of from 1 to 10, q represents the number of repeating units, a number average value of q is in a range of from 1 to 100, and I is an integer in a range of from 0 to 5)

In Formula (3-2), m instances of n inside the parentheses may be the same or different from each other.

In Formula (3-3), q instances of p inside the parentheses may be the same or different from each other.

In Formula (3-4), q instances of p inside the parentheses may be the same or different from each other.

The alkyl group having from 1 to 18 carbon atoms of R³², R³⁴, R³⁶, and R³⁸ may further contain a substituent, and examples of the substituent include a hydroxyl group and an aryl group.

The alkyl group containing an ether bond having from 1 to 18 carbon atoms of R³⁶ and R³⁸ may further contain a substituent, and examples of the substituent include a hydroxyl group and an aryl group.

The alkyl group having from 1 to 6 carbon atoms of R³⁰ may further contain a substituent, and examples of the substituent include a hydroxyl group and an aryl group.

The alkoxy group having from 1 to 6 carbon atoms of R⁴⁰ may further contain a substituent, and examples of the substituent include a hydroxyl group and an aryl group.

Examples of the divalent organic group of L³ in Formulas (3-3) and (3-4) include those the same as the divalent organic group for L¹¹.

In General Formula (3-2), m represents the number of repeating units and, for example, m may be an integer of 1 or greater. The number average of m is, for example, in a range of from 1 to 200, preferably in a range of from 1 to 100, and more preferably in a range of from 1 to 50.

The number average value for m can be confirmed by measuring a number average molecular weight of the polymerizable monomer (3) by a method described in Examples.

In General Formulas (3-3) and (3-4), q represents the number of repeating units and, for example, q may be an integer of 1 or greater. The number average of q is, for example, in a range of from 1 to 100, preferably in a range of from 1 to 80, and more preferably in a range of from 1 to 50.

The polymerizable monomer (3) preferably contains one or more selected from the group consisting of the compound represented by Formula (3-2), the compound represented by Formula (3-3), and the compound represented by Formula (3-4).

In a case where the polymerizable monomer (3) contains one or more selected from the group consisting of the compound represented by Formula (3-2), the compound represented by Formula (3-3), and the compound represented by Formula (3-4), the total amount of the compound represented by Formula (3-2), the compound represented by Formula (3-3), and Formula (3-4) is preferably 50 mass% or more, relative to the total amount of the polymerizable monomer (3).

The polymerizable monomer (3), serving as a polymerization component, may be a single type or a combination of two or more polymerizable monomers (3) having different structures from each other.

The polymerizable monomer (3) can be produced by a known method. Alternatively, a commercially available product of the polymerizable monomer (3) may be used. Examples of the commercially available products of the polymerizable monomer (3) that has a group including a polyoxyalkylene chain and whose polymerizable unsaturated group is a (meth)acryloyl group include: "NK Ester M-20G", "NK Ester M-40G", "NK Ester M-90G", "NK Ester M-230G", "NK Ester AM-90G", "NK Ester AMP-10G", "NK Ester AMP-20G", "NK Ester AMP-60G", which are available from Shin-Nakamura Chemical Co., Ltd.; "BLEMMER PE-90", "BLEMMER PE-200", "BLEMMER PE-350", "BLEMMER PME-100", "BLEMMER PME-200", "BLEMMER PME-400", "BLEMMER PME-4000", "BLEMMER PP-1000", "BLEMMER PP-500", "BLEMMER PP-800", "BLEMMER 70PEP-350B", "BLEMMER 55PET-800", "BLEMMER 50POEP-800B", "BLEMMER 10PPB-500B", "BLEMMER NKH-5050", "BLEMMER AP-400", "BLEMMER AE-350", which are available from NOF Corporation; PLACCEL F series available from Daicel Corporation; and Viscoat series available from Osaka Organic Chemical Industry Ltd.

When the polymerizable monomer (3) is contained as a polymerization component, the percentage of the polymerizable monomer (3) content is, relative to 100 parts by mass of the polymerizable monomer (1), for example, in a range of from 0 to 200 parts by mass, preferably in a range of from 20 to 200 parts by mass relative to 100 parts by mass of the polymerizable monomer (1), more preferably in a range of from 40 to 150 parts by mass relative to 100 parts by mass of the polymerizable monomer (1), and even more preferably in a range of from 70 to 120 parts by mass relative to 100 parts by mass of the polymerizable monomer (1).

The percentage of the polymerizable monomer (3) content can be adjusted based on the feed ratio of raw materials of the polymerizable monomer (3) in producing the polymer of the present invention.

In the polymer of the present invention, the percentage of the polymerizable monomer (3) content is, relative to the total amount of the polymerization components of the polymer, for example, in a range of from 0 to 90 mass%, preferably in a range of from 1 to 80 mass%, more preferably in a range of from 3 to 75 mass%, and even more preferably in a range of from 5 to 70 mass%.

As long as the polymer of the present invention is a polymer containing a polymerizable monomer (1), a polymerizable monomer (2), and an optional polymerizable monomer (3) as polymerization components, an additional polymerizable monomer other than the polymerizable monomer (1), the polymerizable monomer (2), and the optional polymerizable monomer (3) may be contained as a polymerization component in a range that does not impair the effect of the present invention.

The polymer of the present invention is preferably a polymer substantially composed of the polymerizable monomer (1), the polymerizable monomer (2), and the optional polymerizable monomer (3) as the polymerization components, and more preferably a copolymer in which the polymerization components are composed only of the polymerizable monomer (1), the polymerizable monomer (2), and the optional polymerizable monomer (3).

The wording "substantially composed of" as used herein means that the percentage of the total content of the polymerizable monomer (1), the polymerizable monomer (2), and the optional polymerizable monomer (3) is 80 mass% or more, 90 mass% or more, 95 mass% or more, or 99 mass% or more, in the polymerization components of the polymer of the present invention.

The polymerization form of the polymer of the present invention is not particularly limited.

The polymer of the present invention may be a random polymer of the polymerizable monomer (1), the polymerizable monomer (2) and the optional polymerizable monomer (3). The polymer of the present invention may be a block polymer having a polymer block of any one or more of the polymerizable monomer (1), the polymerizable monomer (2), and the optional polymerizable monomer (3).

The polymer of the present invention preferably contains no fluorine atom.

The number average molecular weight (Mn) of the polymer of the present invention is preferably in a range of from 1000 to 50000, more preferably in a range of from 1000 to 30000, and even more preferably in a range of from 1500 to 10000.

The weight average molecular weight (Mw) of the polymer of the present invention is preferably in a range of from 1000 to 300000, more preferably in a range of from 1500 to 250000, even more preferably in a range of from 2000 to 200000, and particularly preferably in a range of from 3000 to 150000.

In the present invention, the weight average molecular weight (Mw) and the number average molecular weight (Mn) are values based on gel permeation chromatography (GPC) measurement calibrated with polystyrene standards.

The values of the number average molecular weight (Mn) and the weight average molecular weight (Mw) of the polymer of the present invention are measured by the method described in Examples.

The anti-foaming agent of the present invention may contain the polymer of the present invention, and may also contain an anti-foaming agent other than the polymer of the present invention. The anti-foaming agent of the present invention may be the polymer of the present invention.

### Method for Producing Polymer

The method for producing the polymer of the present invention is not particularly limited, and the polymer can be produced by a known method.

The polymer of the present invention can be produced by a solution polymerization method, a bulk polymerization method, an emulsion polymerization method, or the like based on a polymerization mechanism such as radical polymerization process, cationic polymerization process, or anionic polymerization process. For example, in a case of a radical polymerization method, a polymerizable monomer mixture is fed into an organic solvent, then a general-purpose radical polymerization initiator is added thereto, and thus the polymer of the present invention can be produced.

As the polymerization initiator, various polymerization initiators can be used, and examples thereof include: peroxides such as t-butylperoxy-2-ethylhexanoate, benzoyl peroxide, and diacyl peroxide; azo compounds such as azobisisobutyronitrile, dimethyl azobisisobutyrate, and phenylazotriphenylmethane; and metal chelate compounds such as Mn(acac)₃.

If necessary, a chain transfer agent such as lauryl mercaptan, 2-mercaptoethanol, ethylthioglycolic acid, or octylthioglycolic acid, or a thiol compound having a coupling group such as γ-mercaptopropyltrimethoxysilane may be used as an additive such as a chain transfer agent.

Examples of the organic solvent include: alcohols such as ethanol, isopropyl alcohol, n-butanol, iso-butanol, and tert-butanol; ketones such as acetone, methyl ethyl ketone, methyl isobutyl ketone, and methyl amyl ketone; esters such as methyl acetate, ethyl acetate, butyl acetate, methyl lactate, ethyl lactate, and butyl lactate; monocarboxylic acid esters such as methyl 2-oxypropionate, ethyl 2-oxypropionate, propyl 2-oxypropionate, butyl 2-oxypropionate, methyl 2-methoxypropionate, ethyl 2-methoxypropionate, propyl 2-methoxypropionate, and butyl 2-methoxypropionate; polar solvents such as dimethylformamide, dimethyl sulfoxide, and N-methylpyrrolidone; ethers such as methyl cellosolve, cellosolve, butyl cellosolve, butyl carbitol, and ethyl cellosolve acetate; propylene glycols such as propylene glycol, propylene glycol monomethyl ether, and propylene glycol monomethyl ether acetate, propylene glycol monoethyl ether acetate and propylene glycol monobutyl ether acetate, and esters thereof; halogen-based solvents such as 1,1,1-trichloroethane and chloroform; ethers such as tetrahydrofuran and dioxane; aromatics such as benzene, toluene and xylene; and fluorinated inert liquids such as perfluorooctane and perfluorotri-n-butylamine.

These solvents may be used singly, or two or more types thereof may be used in combination.

The polymer of the present invention can also be produced by living polymerization such as living radical polymerization or living anion polymerization.

In the living radical polymerization, a dormant species whose active polymerization terminal is protected by an atom or an atomic group reversibly generates a radical and reacts with a monomer, thereby a growth reaction proceeds, and the growth terminal does not lose activity even when the first monomer is consumed, and can react with a second monomer added sequentially and thereby affording a block polymer. Examples of such living radical polymerization include atom transfer radical polymerization (ATRP), reversible addition-fragmentation chain transfer polymerization (RAFT), nitroxide-mediated radical polymerization (NMP), and organotellurium-mediated radical polymerization (TERP). Among these methods, there is no particular restriction on which method to be used, but ATRP is preferable in terms of ease of control and the like. ATRP is a process that involves polymerization in which an organic halide, a sulfonyl halide compound, or the like is used as a polymerization initiator and a metal complex composed of a transition metal compound and a ligand is used as a catalyst.

Specific examples of the polymerization initiator that can be used in ATRP include 1-phenylethyl chloride, 1-phenylethyl bromide, chloroform, carbon tetrachloride, 2-chloropropionitrile, α,α'-dichloroxylene, α,α'-dibromoxylene, hexakis(α-bromomethyl)benzene, and alkyl esters having from 1 to 6 carbon atoms of 2-halogenated carboxylic acids having from 1 to 6 carbon atoms (such as 2-chloropropionic acid, 2-bromopropionic acid, 2-chloroisobutyric acid, 2-bromoisobutyric acid, etc.).

More specific examples of the alkyl ester having from 1 to 6 carbon atoms of 2-halogenated carboxylic acid having from 1 to 6 carbon atoms include methyl 2-chloropropionate, ethyl 2-chloropropionate, methyl 2-bromopropionate, and ethyl 2-bromoisobutyrate.

The transition metal compound that can be used in ATRP is represented by Mⁿ⁺Xₙ.

The transition metal Mⁿ⁺ of the transition metal compound represented by Mⁿ⁺Xₙ can be selected from the group consisting of Cu⁺, Cu²⁺, Fe²⁺, Fe³⁺, Ru²⁺, Ru³⁺, Cr²⁺, Cr³⁺, Mo⁰, Mo⁺, Mo²⁺, Mo³⁺, W²⁺, W³⁺, Rh³⁺, Rh⁴⁺, Co⁺, Co²⁺, Re²⁺, Re³⁺, Ni⁰, Ni⁺, Mn³⁺, Mn⁴⁺, V²⁺, V³⁺, Zn⁺, Zn²⁺, Au⁺, Au²⁺, Ag⁺, and Ag²⁺.

X of the transition metal compound represented by Mⁿ⁺Xₙ can be selected from the group consisting of a halogen atom, an alkoxyl group having from 1 to 6 carbon atoms, (SO₄)_{1/2}, (PO₄)_{1/3}, (HPO₄)_{1/2}, (H₂PO₄), triflate, hexafluorophosphate, methanesulfonate, aryl sulfonate (preferably benzenesulfonate or toluenesulfonate), SeR¹¹, CN and R¹²COO. Here, R¹¹ represents an aryl group, a linear or branched alkyl group having from 1 to 20 carbon atoms (preferably from 1 to 10 carbon atoms), and R¹² represents a hydrogen atom, or a linear or branched alkyl group having from 1 to 6 carbon atoms (preferably a methyl group) which may be substituted with halogen for 1 to 5 times (preferably with fluorine or chlorine for 1 to 3 times).

n of the transition metal compound represented by Mⁿ⁺Xₙ represents a formal charge on the metal, and is an integer in a range of from 0 to 7.

Examples of a ligand compound capable of coordinate-bonding to the transition metal of the above-mentioned transition metal compound include: a compound having a ligand containing one or more nitrogen atoms, oxygen atoms, phosphorus atoms, or sulfur atoms that are capable of coordinating to the transition metal via a σ bond; a compound having a ligand containing two or more carbon atoms that are capable of coordinating to the transition metal via a π bond; and a compound having a ligand that is capable of coordinating to the transition metal via a µ bond or an η bond.

The above-mentioned transition metal complex is not particularly limited, and preferred examples thereof include transition metal complexes of Groups 7, 8, 9, 10, and 11, and further preferred examples thereof include complexes of zerovalent copper, monovalent copper, divalent ruthenium, divalent iron, or divalent nickel.

Specific examples of the catalyst that can be used in ATRP, when the central metal is copper, include complexes with ligands such as 2,2'-bipyridyl and derivatives thereof, 1,10-phenanthroline and derivatives thereof, and polyamines such as tetramethylethylenediamine, pentamethyldiethylenetriamine, and hexamethyltris(2-aminoethyl)amine. Examples of the divalent ruthenium complex include dichlorotris(triphenylphosphine)ruthenium, dichlorotris(tributylphosphine)ruthenium, dichloro(cyclooctadiene)ruthenium, dichloro(benzene)ruthenium, dichloro(p-cymene)ruthenium, dichloro(norbornadiene)ruthenium, cis-dichlorobis(2,2'-bipyridine)ruthenium, dichlorotris(1,10-phenanthroline)ruthenium, and carbonylchlorohydridetris(triphenylphosphine)ruthenium. Furthermore, examples of the divalent iron complex include bis(triphenylphosphine) complexes and triazacyclononane complexes.

A solvent is preferably used in living radical polymerization.

Examples of the solvent used in living radical polymerization include: ester solvents such as ethyl acetate, butyl acetate, and propylene glycol monomethyl ether acetate; ether solvent such as diisopropyl ether, dimethoxyethane, and diethylene glycol dimethyl ether; halogen-based solvents such as dichloromethane and dichloroethane; aromatic solvents such as toluene and xylene; ketone solvents such as methyl ethyl ketone, methyl isobutyl ketone, and cyclohexanone; alcohol solvents such as methanol, ethanol, or isopropanol; aprotic polar solvents such as dimethylformamide and dimethylsulfoxide.

The above-mentioned solvents may be used singly, or two or more types thereof may be used in combination.

The polymerization temperature in the living radical polymerization is preferably in a range of from room temperature to 120°C.

When the polymer of the present invention is produced by living radical polymerization, there may be a case where a metal derived from the transition metal compound used in the polymerization remains in the resulting polymer. After completion of the polymerization, the metal remaining in the resulting polymer is preferably removed by using active alumina or the like.

### [Lubricating Oil Composition]

The anti-foaming agent of the present invention can be suitably used as an anti-foaming agent for a lubricating oil composition, and the lubricating oil composition of the present invention contains the anti-foaming agent of the present invention.

The anti-foaming agent of the present invention is a polymer having a crosslinked structure by virtue of containing, as a polymerization component, the polymerizable monomer (2) having two or more polymerizable unsaturated groups, and is capable of maintaining low solubility in a lubricating base oil by suppressing the spread of molecules of the anti-foaming agent even in a high-temperature environment. This allows the anti-foaming agent of the present invention to exhibit high anti-foaming performance even in a high-temperature environment.

In a machine including an internal combustion engine or an electric motor, a high shear force is applied to a drive unit of the machine, but the anti-foaming agent of the present invention suppresses reduction to low molecular weight by virtue of the crosslinked structure thereof, and therefore, the anti-foaming performance can be suppressed from being deteriorated.

The anti-foaming agent of the present invention has high anti-foaming performance as described above, and can be used without limitation in a lubricating oil composition for a driving system device such as a shock absorber, a transmission, or power steering of an automobile.

The percentage of the content of the anti-foaming agent of the present invention in the lubricating oil composition of the present invention is not particularly limited, and is, for example, in a range of from 1 to 1,000 ppm by mass, preferably in a range of from 5 to 700 ppm by mass, and more preferably in a range of from 10 to 400 ppm by mass of the total amount of the lubricating oil composition.

The lubricating base oil of the lubricating oil composition of the present invention may be any known base oil, and may be a mineral oil, a synthetic oil, or a mixed oil of a mineral oil and a synthetic oil.

Examples of the mineral oil include a mineral oil obtained by subjecting a lubricating oil fraction, which is produced by vacuum distillation of an atmospheric residue obtained through atmospheric distillation of crude oil, to one or more refining treatments such as solvent deasphalting, solvent extraction, hydrocracking, solvent dewaxing, catalytic dewaxing, or hydrotreating, and examples thereof include paraffinic mineral oil and naphthenic mineral oil.

In addition, examples thereof include a mineral oil-based wax and a mineral oil produced by isomerizing a wax (GTL wax) produced by the Fischer-Tropsch process or the like.

Examples of the synthetic oil include polyolefins such as polybutene, α-olefin homopolymers, and copolymers (for example, ethylene-α-olefin copolymers), various esters such as polyol esters, dibasic acid esters, and phosphoric acid esters, various ethers such as polyphenyl ethers, polyglycols, alkylbenzenes and alkylnaphthalenes.

The lubricating base oil may be used singly, or two or more types thereof may be used in combination.

The kinematic viscosity of the lubricating base oil at 100°C is preferably in a range of from 1 to 20 mm²/s, more preferably in a range of from 2 to 15 mm²/s, and even more preferably in a range of from 2 to 10 mm²/s.

When the kinematic viscosity of the lubricating base oil at 100°C falls within the above range, evaporation loss is reduced and power loss due to viscous resistance is not excessively large, thereby making it easier to achieve an improvement in fuel efficiency.

The lubricating base oil preferably has a paraffin content (sometimes referred to as %Cp) by n-d-M ring analysis of 70% or more, more preferably 75% or more, and even more preferably 80% or more.

When the paraffin content is within the above range, the oxidation stability and the like of the lubricating base oil become good.

The percentage of the lubricating base oil content in the lubricating oil composition is, for example, in a range of from 65 to 95 mass%, preferably in a range of from 70 to 95 mass%, and more preferably in a range of from 70 to 90 mass% of the total amount of the lubricating oil composition.

The lubricating oil composition of the present invention may include the anti-foaming agent and lubricating base oil of the present invention, and may further contain other additives.

Other additives that may be contained include an ashless detergent, an ashless friction modifier, an anti-wear agent, an extreme pressure agent, a viscosity index improver, a metal deactivator, a pour point depressant, and a rust inhibitor. These additives may be used singly, or two or more types thereof may be used in combination.

The content of each of the other additives can be appropriately adjusted in a range that does not impair the effect of the present invention, and is usually 0.001 to 25 mass%, preferably 0.005 to 20 mass%, and more preferably 0.01 to 15 mass% based on the total amount of the lubricating oil composition.

The total content of the other additives is preferably 25 mass% or less, more preferably 20 mass% or less, and even more preferably 15 mass% or less based on the total amount of the lubricating oil composition.

Examples of the ashless detergent include alkenyl succinic acid imide, such as alkenyl succinic acid monoimide and alkenyl succinic acid bisimide, and boron-modified alkenyl succinic acid imide.

Examples of the ashless friction modifier include an aliphatic amine, a fatty acid ester, a fatty acid amide, a fatty acid, an aliphatic alcohol, and an aliphatic ether, each of which has at least one alkyl group or alkenyl group having from 6 to 30 carbon atoms in the molecule.

Examples of the anti-wear agent or extreme pressure agent include sulfur-containing compounds such as zinc dithiophosphate; phosphorus-containing compounds such as phosphite esters, phosphate esters, phosphonate esters, and amine salts or metal salts thereof; and sulfur- and phosphorus-containing anti-wear agents such as thiophosphite esters, thiophosphate esters, thiophosphonate esters, and amine salts or metal salts thereof.

Examples of the viscosity index improver include polymethacrylate, dispersed polymethacrylate, an olefin-based copolymer (for example, an ethylene-propylene copolymer), a dispersed olefin-based copolymer, and a styrene-based copolymer (for example, a styrene-diene copolymer or a styrene-isoprene copolymer).

Examples of the metal deactivator include a benzotriazole-based compound, a tolyltriazole-based compound, an imidazole-based compound, and a pyrimidine-based compound.

Examples of the pour point depressant include an ethylene-vinyl acetate copolymer, a condensate of chlorinated paraffin and naphthalene, a condensate of chlorinated paraffin and phenol, polymethacrylate, and polyalkylstyrene.

Examples of the rust inhibitor include a petroleum sulfonate, an alkylbenzene sulfonate, a dinonylnaphthalene sulfonate, an alkenyl succinate, and a polyhydric alcohol ester.

The lubricating oil composition of the present invention is suitably used in a machine including an internal combustion engine or an electric motor for lubricating a drive unit of the machine.

Regarding lubrication of the drive unit, for example, in an electric vehicle, the drive unit is generally integrated with a motor, an inverter, and a gearbox, and the inside of the gearbox is filled with the lubricating oil composition of the present invention, whereby the drive unit can be lubricated. In the case of a gasoline-powered vehicle, in an internal combustion engine which is a drive unit, the lubricating oil composition of the present invention is stored in an oil pan and supplied into a cylinder via an oil pump, whereby the starting unit can be lubricated. The lubrication of the drive unit is not limited to these forms, and it is possible to lubricate the drive unit by filling or supplying the lubricating oil composition of the present invention to a portion where metals come into contact with each other.

The machine to which the lubricating oil composition of the present invention can be used is not limited as long as the machine includes an internal combustion engine or an electric motor, such as an automobile (a gasoline-powered vehicle or an electric vehicle), a robot (an industrial robot or an entertainment robot), an aircraft (an airplane or a helicopter), a ship, and various home appliances.

### EXAMPLES

The present invention will be specifically described with reference to Examples and Comparative Examples below.

Note that the present invention is not limited to the following Examples.

In Examples and Comparative Examples, the weight average molecular weight (Mw) and the number average molecular weight (Mn) are values based on gel permeation chromatography (GPC) measurement calibrated with polystyrene standards.

The measurement conditions of GPC are as follows.

### GPC Measurement Conditions

Measuring instrument: high performance GPC system "HLC-8320GPC" available from Tosoh Corporation
Columns: "TSK GUARDCOLUMN SuperHZ-L" available from Tosoh Corporation + "TSK gel SuperHZM-N" available from Tosoh Corporation + "TSK gel SuperHZM-N" available from Tosoh Corporation + "TSK gel SuperHZM-N" available from Tosoh Corporation + "TSK gel SuperHZM-N" available from Tosoh Corporation
Detector: RI (differential refractometer)
Data processing: "EcoSEC Data Analysis Version 1.07" available from Tosoh Corporation
Column temperature: 40°C
Developing solvent: tetrahydrofuran
Flow rate: 0.35 mL/min
Measurement sample: 7.5 mg of a sample was dissolved in 10 mL of tetrahydrofuran, the resultant solution was filtered through a microfilter, and the obtained product was used as a measurement sample.
Sample injection volume: 20 µL
Standard sample: The following monodisperse polystyrenes having known molecular weights were used in accordance with the measurement manual of "HLC-8320GPC".

### Monodisperse Polystyrene

"A-300" available from Tosoh Corporation
"A-500" available from Tosoh Corporation
"A-1000" available from Tosoh Corporation
"A-2500" available from Tosoh Corporation
"A-5000" available from Tosoh Corporation
"F-1" available from Tosoh Corporation
"F-2" available from Tosoh Corporation
"F-4" available from Tosoh Corporation
"F-10" available from Tosoh Corporation
"F-20" available from Tosoh Corporation
"F-40" available from Tosoh Corporation
"F-80" available from Tosoh Corporation
"F-128" available from Tosoh Corporation
"F-288" available from Tosoh Corporation

### (Synthesis Example 1: Synthesis of Anti-Foaming Agent (1))

Into a glass flask equipped with a stirrer, a thermometer, a condenser, and a dropping device, 30 parts by mass of dipropylene glycol monomethyl ether acetate as a solvent was fed and, while the dipropylene glycol monomethyl ether acetate was stirred in a nitrogen stream, the temperature was raised to 95°C.

Next, two types of dropping liquids, i.e., a monomer solution obtained by dissolving 15 parts by mass of 3-(methacryloyloxy)propyltris(trimethylsiloxy)silane, 13.8 parts by mass of methoxypolyethylene glycol acrylate (where the number of repeating ethylene oxide chains was about 9), and 4.5 parts by mass of polyethylene glycol dimethacrylate (where the number of repeating ethylene oxide chains was about 4) in 37.7 parts by mass of dipropylene glycol monomethyl ether acetate, and a polymerization initiator solution obtained by dissolving 1 part by mass of t-butylperoxy-2-ethylhexanoate as a radical polymerization initiator in 10 parts by mass of dipropylene glycol monomethyl ether acetate, were set in different dropping devices.

While the inside of the flask was kept at 95°C, the monomer solution and the polymerization initiator solution were simultaneously started to be added dropwise. The monomer solution was added dropwise over 2 hours while the polymerization initiator solution was added dropwise over 2.5 hours. After completion of the dropwise addition of the polymerization initiator solution, the flask was stirred at 95°C for 3 hours, then the temperature was raised to 110°C, and further stirred for 1 hour to obtain a solution of an anti-foaming agent (1).

As a result of GPC measurement of the molecular weight of the obtained anti-foaming agent (1), the weight average molecular weight (Mw) was 33000.

### (Synthesis Example 2: Synthesis of Anti-Foaming Agent (2))

Into a glass flask equipped with a stirrer, a thermometer, a condenser, and a dropping device, 30 parts by mass of dipropylene glycol monomethyl ether acetate as a solvent was fed and, while the dipropylene glycol monomethyl ether acetate was stirred in a nitrogen stream, the temperature was raised to 100°C.

Next, two types of dropping liquids, i.e., a monomer solution obtained by dissolving 15 parts by mass of 3-(methacryloyloxy)propyltris(trimethylsiloxy)silane, 13.8 parts by mass of methoxypolyethylene glycol acrylate (where the number of repeating ethylene oxide chains was about 9), and 4.5 parts by mass of trimethylolpropane triacrylate in 93.2 parts by mass of dipropylene glycol monomethyl ether acetate, and a polymerization initiator solution obtained by dissolving 1.67 parts by mass of t-butylperoxy-2-ethylhexanoate as a radical polymerization initiator in 10 parts by mass of dipropylene glycol monomethyl ether acetate, were set in different dropping devices.

While the inside of the flask was kept at 100°C, the monomer solution and the polymerization initiator solution were simultaneously started to be added dropwise. The monomer solution was added dropwise over 2 hours while the polymerization initiator solution was added dropwise over 2.5 hours. After completion of the dropwise addition of the polymerization initiator solution, the flask was stirred at 100°C for 4 hours to obtain a solution of an anti-foaming agent (2).

As a result of GPC measurement of the molecular weight of the obtained anti-foaming agent (2), the weight average molecular weight (Mw) was 20000.

### (Synthesis Example 3: Synthesis of Anti-Foaming Agent (3))

Into a glass flask equipped with a stirrer, a thermometer, a condenser, and a dropping device, 30 parts by mass of dipropylene glycol monomethyl ether acetate as a solvent was fed and, while the dipropylene glycol monomethyl ether acetate was stirred in a nitrogen stream, the temperature was raised to 105°C.

Next, two types of dropping liquids, i.e., a monomer solution obtained by dissolving 15 parts by mass of 3-(methacryloyloxy)propyltris(trimethylsiloxy)silane, 13.8 parts by mass of pentaerythritol tetraacrylate (where the number of repeating ethylene oxide chains was about 9), and 4.5 parts by mass of trimethylolpropane triacrylate in 93.2 parts by mass of dipropylene glycol monomethyl ether acetate, and a polymerization initiator solution obtained by dissolving 1.67 parts by mass of t-butylperoxy-2-ethylhexanoate as a radical polymerization initiator in 10 parts by mass of dipropylene glycol monomethyl ether acetate, were set in different dropping devices.

While the inside of the flask was kept at 105°C, the monomer solution and the polymerization initiator solution were simultaneously started to be added dropwise. The monomer solution was added dropwise over 2 hours while the polymerization initiator solution was added dropwise over 2.5 hours. After completion of the dropwise addition of the polymerization initiator solution, the flask was stirred at 105°C for 4 hours to obtain a solution of an anti-foaming agent (3).

As a result of GPC measurement of the molecular weight of the obtained anti-foaming agent (3), the weight average molecular weight (Mw) was 26000.

### (Synthesis Example 4: Synthesis of Anti-Foaming Agent (4))

Into a glass flask equipped with a stirrer, a thermometer, a condenser, and a dropping device, 30 parts by mass of dipropylene glycol monomethyl ether acetate as a solvent was fed and, while the dipropylene glycol monomethyl ether acetate was stirred in a nitrogen stream, the temperature was raised to 110°C.

Next, two types of dropping liquids, i.e., a monomer solution obtained by dissolving 15 parts by mass of 3-(methacryloyloxy)propyltris(trimethylsiloxy)silane, 13.8 parts by mass of dipentaerythritol hexaacrylate (where the number of repeating ethylene oxide chains was about 9), and 4.5 parts by mass of trimethylolpropane triacrylate in 93.2 parts by mass of dipropylene glycol monomethyl ether acetate, and a polymerization initiator solution obtained by dissolving 6.66 parts by mass of t-butylperoxy-2-ethylhexanoate as a radical polymerization initiator in 10 parts by mass of dipropylene glycol monomethyl ether acetate, were set in different dropping devices.

While the inside of the flask was kept at 110°C, the monomer solution and the polymerization initiator solution were simultaneously started to be added dropwise. The monomer solution was added dropwise over 2 hours while the polymerization initiator solution was added dropwise over 2.5 hours. After completion of the dropwise addition of the polymerization initiator solution, the flask was stirred at 110°C for 4 hours to obtain a solution of an anti-foaming agent (4).

As a result of GPC measurement of the molecular weight of the obtained anti-foaming agent (4), the weight average molecular weight (Mw) was 13000.

### (Synthesis Example 5: Synthesis of Anti-Foaming Agent (5))

Into a glass flask equipped with a stirrer, a thermometer, a condenser, and a dropping device, 30 parts by mass of n-butyl acetate as a solvent was fed and, while the n-butyl acetate was stirred in a nitrogen stream, the temperature was raised to 100°C.

Next, two types of dropping liquids, i.e., a monomer solution obtained by dissolving 15 parts by mass of 3-(methacryloyloxy) propyltris(trimethylsiloxy)silane, 13.8 parts by mass of methoxypolyethylene glycol acrylate (where the number of repeating ethylene oxide chains was about 9), and 4.5 parts by mass of tris(2-acryloyloxyethyl) isocyanurate in 78.1 parts by mass of n-butyl acetate, and a polymerization initiator solution obtained by dissolving 1.67 parts by mass of t-butylperoxy-2-ethylhexanoate as a radical polymerization initiator in 10 parts by mass of n-butyl acetate, were set in different dropping devices.

While the inside of the flask was kept at 100°C, the monomer solution and the polymerization initiator solution were simultaneously started to be added dropwise. The monomer solution was added dropwise over 2 hours while the polymerization initiator solution was added dropwise over 2.5 hours. After completion of the dropwise addition of the polymerization initiator solution, the flask was stirred at 100°C for 3 hours, then the temperature was raised to 110°C, and further stirred for 1 hour to obtain a solution of an anti-foaming agent (5).

As a result of GPC measurement of the molecular weight of the obtained anti-foaming agent (5), the weight average molecular weight (Mw) was 14000.

### (Synthesis Example 6: Synthesis of Anti-Foaming Agent (6))

Into a glass flask equipped with a stirrer, a thermometer, a condenser, and a dropping device, 30 parts by mass of dipropylene glycol monomethyl ether acetate as a solvent was fed and, while the dipropylene glycol monomethyl ether acetate was stirred in a nitrogen stream, the temperature was raised to 110°C.

Next, two types of dropping liquids, i.e., a monomer solution obtained by dissolving 12.5 parts by mass of 3-(methacryloyloxy)propyltris(trimethylsiloxy)silane and 12.5 parts by mass of polyethylene glycol dimethacrylate (where the number of repeating ethylene oxide chains was about 9) in 60 parts by mass of dipropylene glycol monomethyl ether acetate, and a polymerization initiator solution obtained by dissolving 7.5 parts by mass of t-butylperoxy-2-ethylhexanoate as a radical polymerization initiator in 10 parts by mass of dipropylene glycol monomethyl ether acetate, were set in different dropping devices.

While the inside of the flask was kept at 110°C, the monomer solution and the polymerization initiator solution were simultaneously started to be added dropwise. The monomer solution was added dropwise over 2 hours while the polymerization initiator solution was added dropwise over 2.5 hours. After completion of the dropwise addition of the polymerization initiator solution, the flask was stirred at 110°C for 2 hours to obtain a solution of an anti-foaming agent (5).

As a result of GPC measurement of the molecular weight of the obtained anti-foaming agent (5), the weight average molecular weight (Mw) was 15000.

### (Comparative Synthesis Example 1: Synthesis of Anti-Foaming Agent (1'))

Into a glass flask equipped with a stirrer, a thermometer, a condenser, and a dropping device, 52 parts by mass of n-butyl acetate as a solvent was fed and, while the n-butyl acetate was stirred in a nitrogen stream, the temperature was raised to 85°C.

Next, two types of dropping liquids, i.e., 30 parts by mass of 3-(methacryloyloxy)propyltris (trimethylsiloxy)silane dissolved in 50 parts by mass of n-butyl acetate with 20 parts by mass of methoxypolyethylene glycol methacrylate (where the number of repeating ethylene oxide chains was about 9), and a polymerization initiator solution obtained by dissolving 3 parts by mass of t-butylperoxy-2-ethylhexanoate as a radical polymerization initiator in 15 parts by mass of n-butyl acetate, were set in different dropping devices.

While the inside of the flask was kept at 85°C, the monomer solution and the polymerization initiator solution were simultaneously added dropwise over 2 hours. After completion of the dropwise addition, the flask was stirred at 85°C for 4 hours, then the temperature was raised to 110°C, and further stirred for 1 hour to obtain a solution of an anti-foaming agent (1').

As a result of GPC measurement of the molecular weight of the obtained anti-foaming agent (1'), the weight average molecular weight (Mw) was 40000.

### (Comparative Synthesis Example 2: Synthesis of Anti-Foaming Agent (2'))

A solution of an anti-foaming agent (2') was obtained in the same manner as in Comparative Synthesis Example 1 except that 30 parts by mass of a compound represented by Formula (1') set forth below was used instead of 3-methacryloyloxypropyltris(trimethylsiloxy)silane. 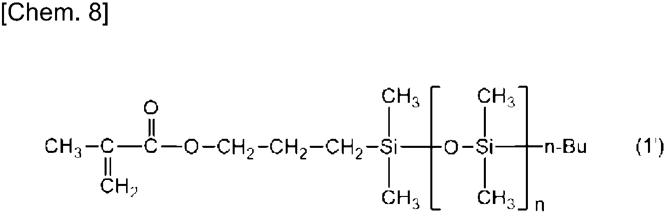 (The repeating moiety of n is about 65.)

As a result of GPC measurement of the molecular weight of the obtained anti-foaming agent (2'), the weight average molecular weight (Mw) was 25000.

### (Comparative Example 3)

A commercially available dimethyl silicone ("KF-96-50000 cs" manufactured by Shin-Etsu Silicone Co., Ltd.) represented below was separately prepared as an anti-foaming agent (3').

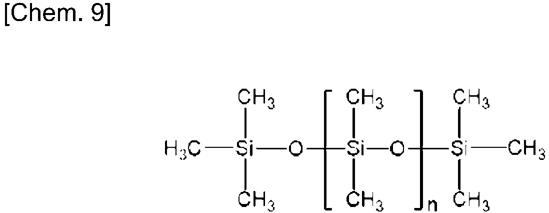

Using the anti-foaming agent produced above, the following foaming test was performed to evaluate the anti-foaming performance of the anti-foaming agent. The results are presented in Table 1.

### (Preparation of Lubricating Oil Composition)

A lubricating oil composition was prepared by adding, to 100 parts by mass of a base lubricating oil mainly composed of a lubricating base oil (paraffinic mineral oil) and containing small amounts of various additives (such as a viscosity index improver, a phosphorous acid ester compound, a thiadiazole compound, a calcium detergent, a metal deactivator, an ashless dispersant, and an antioxidant), the anti-foaming agent listed in Table 1, which was diluted with kerosene, in the amount listed in Table 1.

The resulting lubricating oil composition was subjected to the foaming test described below. The results are presented in Table 1.

### (Foaming Test)

The foaming test was performed in accordance with a homogenizer method disclosed in JP 2008-120880 A.

Using a homogenizer ("T.K. Robomix" manufactured by PRIMIX Corporation) equipped with a generator shaft ("Minimixer" manufactured by PRIMIX Corporation), the lubricating oil composition was stirred according to the following conditions, and the reading (mL) of the oil level before stirring was subtracted from the reading (mL) of the foaming surface after 3 seconds from the end of stirring to obtain the foaming amount (mL). The smaller the amount of foaming, the better the anti-foaming property.
Rotation speed: 16000 rpm
Oil temperature: 80°C or 120°C
Oil amount: 80 ml
Container: 200 ml graduated cylinder (inner diameter of φ36 mm)
Stirring time: 1 minute

**[Table 1]**

| | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| Anti-foaming agent | | Anti-foaming agent (1) | Anti-foaming agent (2) | Anti-foaming agent (3) | Anti-foaming agent (4) | Anti-foaming agent (5) | Anti-foaming agent (6) | Anti-foaming agent (1') | Anti-foaming agent (2') | Anti-foaming agent (3') |
| Addition amount [ppm by mass] | | 100 | 100 | 100 | 100 | 100 | 100 | 100 | 100 | 100 |
| Active ingredient content of anti-foaming agent [mass%] | | 1 | 1 | 1 | 1 | 1 | 1 | 1 | 1 | 1 |
| Amount of foaming [mL] | 80°C | 0 | 0 | 0 | 0 | 0 | 0 | 10 | 14 | 30 |
| | 120°C | 24 | 14 | 0 | 2 | 0 | 10 | 100 | 100 | 100 |

From the results in Table 1, it can be confirmed that the anti-foaming agents (1) to (6) are capable of exhibiting excellent anti-foaming properties in both temperature environments of 80°C and 120°C. On the other hand, the anti-foaming agent (1') not using the "polymerizable monomer (2) having two or more polymerizable unsaturated groups" does not have sufficient anti-foaming properties. As for the anti-foaming agent (2'), the introduction of a polysiloxane structure imparts anti-foaming properties at 80°C but does not impart sufficient anti-foaming properties at 120°C.

## Claims

1. An anti-foaming agent comprising:
a polymer containing, as polymerization components, at least a polymerizable monomer (1) and a polymerizable monomer (2);
the polymerizable monomer (1) having a functional group represented by -Si[OSi(R)₃]ₙ[R']₃₋ₙ (where n is an integer in a range of from 1 to 3, R is each independently an alkyl group having from 1 to 3 carbon atoms, and R' is each independently an alkyl group having from 1 to 3 carbon atoms) and one polymerizable unsaturated group; and the polymerizable monomer (2) having two or more polymerizable unsaturated groups.

2. The anti-foaming agent according to claim 1, wherein the polymerizable monomer (1) is a compound represented by General Formula (1-1): 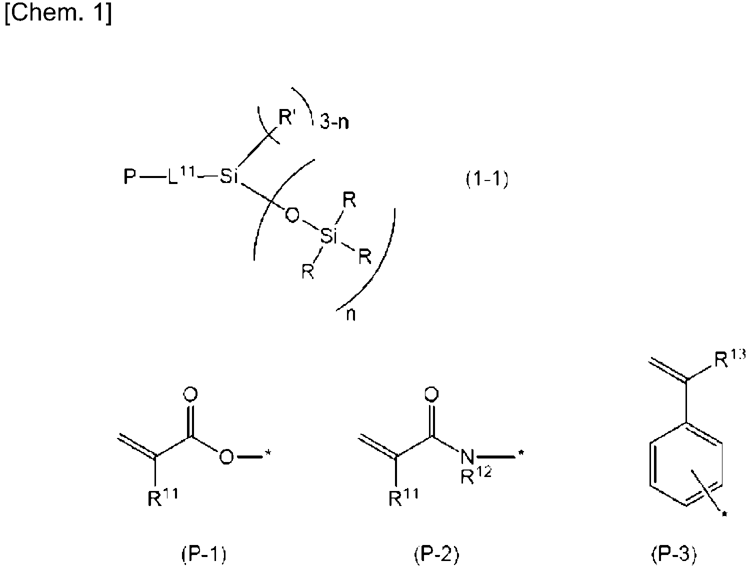 where
R is each independently an alkyl group having from 1 to 3 carbon atoms,
R' is each independently an alkyl group having from 1 to 3 carbon atoms,
L¹¹ is a divalent organic group or a single bond,
n is an integer in a range of from 1 to 3, and
P is a polymerizable group represented by General Formula (P-1), a polymerizable group represented by General Formula (P-2), or a polymerizable group represented by General Formula (P-3),
where in General Formulas (P-1), (P-2), and (P-3),
R¹¹ is a hydrogen atom or a methyl group,
R¹² is a hydrogen atom or an organic group,
R¹³ is a hydrogen atom or a methyl group, and
* is a bond that binds to L¹¹.

3. The anti-foaming agent according to claim 1 or 2, wherein a content of the polymerizable monomer (1) in the polymerization components is in a range of 10 mass% or more.

4. The anti-foaming agent according to claim 1 or 2, wherein the polymerizable monomer (2) is a compound represented by General Formula (2-1): 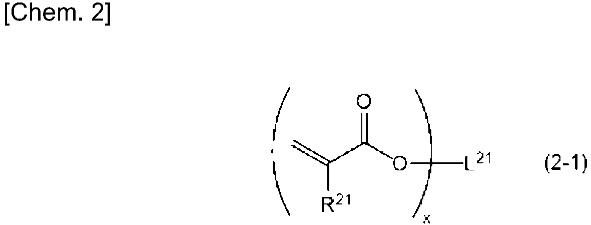 where
R²¹ is a hydrogen atom or a methyl group,
X is an integer of 2 or more, and
L²¹ is an x-valent organic group.

5. The anti-foaming agent according to claim 1 or 2, wherein a content of the polymerizable monomer (2) in the polymerization components is in a range of from 1 to 75 mass%.

6. The anti-foaming agent according to claim 1 or 2, wherein the polymerization components include a polymerizable monomer (3) containing one or more selected from the group consisting of an alkyl group having from 1 to 18 carbon atoms, an aromatic group having from 6 to 18 carbon atoms, a group containing a polyoxyalkylene chain, and a group containing a polyester chain.

7. The anti-foaming agent according to claim 6, wherein the polymerizable monomer (3) is one or more selected from the group consisting of: a compound represented by General Formula (3-1), a compound represented by General Formula (3-2), a compound represented by General Formula (3-3), a compound represented by General Formula (3-4), and a compound represented by General Formula (3-5): 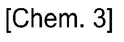 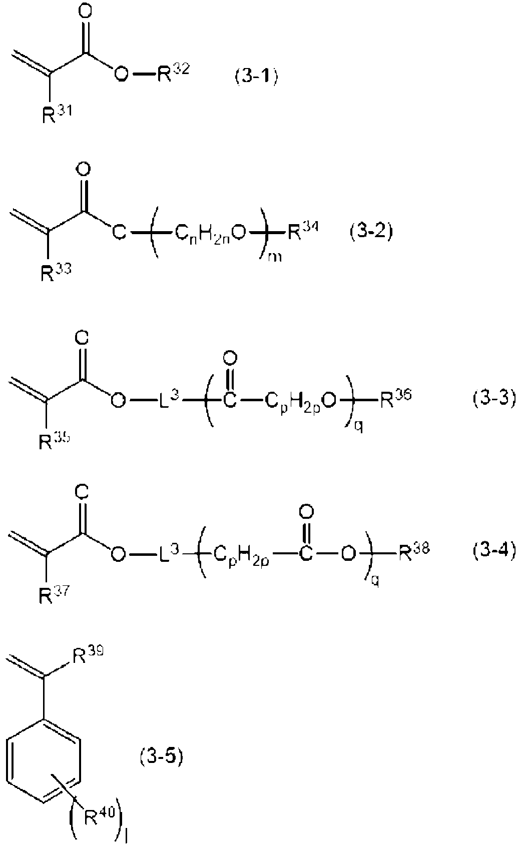
where in General Formulas (3-1), (3-2), (3-3), (3-4), and (3-5),
R³¹ is a hydrogen atom or a methyl group,
R³² is an alkyl group having from 1 to 18 carbon atoms,
R³³ is a hydrogen atom or a methyl group,
R³⁴ is a hydrogen atom or an alkyl group having from 1 to 18 carbon atoms,
R³⁵ is a hydrogen atom or a methyl group,
R³⁶ is an alkyl group having from 1 to 18 carbon atoms, an alkyl group containing an ether bond having from 1 to 18 carbon atoms, or a hydrogen atom,
R³⁷ is a hydrogen atom or a methyl group,
R³⁸ is an alkyl group having from 1 to 18 carbon atoms, an alkyl group containing an ether bond having from 1 to 18 carbon atoms, or a hydrogen atom,
L³ is a divalent organic group or a single bond,
R³⁹ is a hydrogen atom or a methyl group,
R⁴⁰ is each independently an alkyl group having from 1 to 6 carbon atoms or an alkoxy group having from 1 to 6 carbon atoms,
n is an integer in a range of from 1 to 4, m represents the number of repeating units, a number average value of m is in a range of from 1 to 200, p is an integer in a range of from 1 to 10, q represents the number of repeating units, a number average value of q is in a range of from 1 to 100, and I is an integer in a range of from 0 to 5.

8. The anti-foaming agent according to claim 7, wherein the polymerizable monomer (3) is the compound represented by General Formula (3-2).

9. The anti-foaming agent according to claim 6, wherein a content of the polymerizable monomer (3) in the polymerization components is in a range of from 0 to 75 mass%.

10. The anti-foaming agent according to claim 1 or 2, wherein a weight average molecular weight is in a range of from 2000 to 200000.

11. A lubricating oil composition comprising a lubricating base oil and the anti-foaming agent according to claim 1.

12. The lubricating oil composition according to claim 11, which is used in a machine including an internal combustion engine or an electric motor for lubricating a drive unit of the machine.

13. The lubricating oil composition according to claim 11, which is used in an automobile including an internal combustion engine or an electric motor for lubricating a drive unit of the automobile.

14. A machine using the lubricating oil composition according to claim 11 in a drive unit.
